# EUROPEAN PATENT APPLICATION

(11) **EP 4 737 363 A1**
(43) Date of publication of application: **06.05.2026**
(21) Application number: 25212591.9
(22) Date of filing: 31.10.2025
(51) Int. Cl.: B65G 54/02

(54) **LINEAR MOTOR CONVEYOR SYSTEM HAVING MULTIPLE SAFETY ZONES**

(30) Priority: 31.10.2024 US 202463714673 P
(71) Applicant: ATS Corporation, Cambridge, ON N3H 4R7 (CA)
(72) Inventor: DOLGOVYKH, Anton, Cambridge, Ontario (CA); AUGUSTIN, Florian, Cambridge, Ontario (CA); KLEINIKKINK, Albert, Cambridge, Ontario (CA)
(74) Representative: Noble, Nicholas

(57) **Abstract**

A linear motor conveyor system comprises a plurality of track sections (1-7) each comprising a plurality of coils (202) of a linear motor, the plurality of track sections being arranged to provide a conveyor path along which a plurality of shuttles move. The track sections are divided in a plurality of physical safety zones (204a-204c) each comprising a subset of coils of the linear motor and capable of independently de-energizing the subset of coils of the respective physical safety zone. A plurality of physical safety zones (204b, 204c) may be grouped in a virtual safety zone (206). A controller is configured to de-energize the subset of coils of the respective physical safety zones of a virtual safety zone when receiving a halt signal associated with the virtual safety zone to stop motion of shuttles within the virtual safety zone.

## Description

### TECHNICAL FIELD

The current application relates to linear motor conveyor systems, and in particular to providing multiple safety zones within the linear motor conveyor.

### BACKGROUND

Linear motor conveyor systems are used in manufacturing, assembly and automation processes. A linear motor conveyor uses a linear motor to independently control the movement of one or more shuttles along a track. The shuttles can carry raw material, parts, components, tooling etc. through one or more processes.

Linear motor conveyor systems can have multiple sections at which different stations operate. The machines operating at the different sections may operate at relatively high speed and as such prevent a hazard to individuals. The different stations or sections are often enclosed within guarding or other protections in order to maintain a safe distance between the moving components, such as the shuttles on the conveyor or other equipment, and individuals. During commissioning and integration, or during operation, it may be necessary or desirable to have an individual work on or in proximity to one or more of the sections. When an individual is working on a section or is in close proximity to any components that present a potential hazard, the conveyor system is placed in a state that is safe to carry out the necessary work. This can include, for example, stopping the motion of any components and enabling a safety mechanism that prevents unintended movement of the components.

While such safety mechanisms allow work on the conveyor or other components to be performed safely, it can require the stopping of the entire conveyor system to work on one section. For example, the conveyor system, or the different processing sections, may operate in a synchronous manner in which the movement of components is synchronized, either to each other or to a common external component such as a master synchronization component. Stopping one synchronous section can require stopping all of the synchronous sections.

Stopping the entire conveyor system, whether during commissioning and integration, or during normal operations can be undesirable as it leads to a longer commissioning and integration process or lowers throughput during operation.

An additional, alternative and or improved safety system allowing for safely working on the conveyor system is desirable.

### BRIEF DESCRIPTION OF THE DRAWINGS

Further features and advantages of the present disclosure will become apparent from the following detailed description, taken in combination with the appended drawings, in which:
FIG. 1 depicts an illustrative linear motor conveyor system;
FIGs. 2A - 2C depicts details of a safety system of the linear motor conveyor system;
FIG. 3A - 3C depicts operation of a virtual safety zone of a linear motor conveyor system;
FIG. 4A - 4D depicts recovery of the virtual safety zone and the resumption of normal operation of the linear motor conveyor system;
FIG. 5 depicts a method of operating a virtual safety zone;
FIG. 6 depicts a further method of operating a virtual safety zone;
FIG. 7 depicts a linear motor conveyor system with multiple synchronous stations;
FIG. 8A depicts a linear motor conveyor system with multiple synchronous safety zones;
FIGs. 8B and 8C depict an extended synchronous safety zone;
FIGs. 9A - 9D depicts a recovery process with multiple synchronous safety zones;
FIGs 10A, 10B depicts a portion of a recovery process for multiple synchronous safety zones;
FIGs 10C, 10D depicts a portion of a recovery process for multiple synchronous safety zones; and
FIG. 11 depicts a global recovery process for recovering a conveyor system with multiple synchronous safety zones.

### DETAILED DESCRIPTION

In accordance with the present disclosure there is provided a linear motor conveyor system comprising: plurality of track sections each comprising a plurality of coils of a linear motor, the plurality of track sections arranged to provide a conveyor path along which a plurality of shuttles move; a plurality of physical safety zones each comprising a subset of coils of the linear motor and capable of independently de-energizing the subset of coils of the respective physical safety zone; and a controller configured to: define a plurality of virtual safety zones each comprising at least a portion one or more physical safety zones; receive a halt signal associated with a virtual safety zone of the plurality of virtual safety zones; and disabling the one or more physical safety zones of the virtual safety zone associated with the received halt signal to stop motion of shuttles within the virtual safety zone and de-energize the subset of coils of the one or more physical safety zones of the virtual safety zone.

In a further embodiment of the linear motor conveyor, one or more of: at least one of the physical safety zones comprises all of the coils of one of the track sections; at least one of the physical safety zones comprises a subset of the coils of one of the track sections; at least one of the physical safety zones comprises between 1 and 50 coils of one of the track sections; and at least one of the physical safety zones comprises between 10 and 30 coils of one of the track sections.

In a further embodiment of the linear motor conveyor, the controller is further configured to stop shuttles from entering a disabled physical safety zone.

In a further embodiment of the linear motor conveyor, the controller is further configured to: enable the disabled virtual safety zone; recover shuttles in the enabled virtual safety zone to recovery positions; and resume normal operation of the enabled virtual safety zone.

In a further embodiment of the linear motor conveyor, the controller is further configured to: control motion of shuttles in enabled virtual safety zones while one or more of the virtual safety zones are disabled.

In a further embodiment of the linear motor conveyor, at least one of virtual safety zones comprises a synchronous virtual safety zone associated with a synchronous machine.

In a further embodiment of the linear motor conveyor, the synchronous virtual safety zone comprises a synchronous portion of the track over shuttles move synchronously.

In a further embodiment of the linear motor conveyor, shuttles in the synchronous portion of the synchronous virtual move synchronously relative to one or more of: other shuttles in the synchronous portion; and an external synchronization device.

In a further embodiment of the linear motor conveyor, the synchronous virtual safety zone further comprises an asynchronous portion of the track over shuttles move asynchronously arranged on either end of the synchronous portion of the track.

In a further embodiment of the linear motor conveyor, the halt signal is received when work is to be performed on equipment of a virtual safety zone.

In a further embodiment of the linear motor conveyor, the halt signal is provided when one or more of: a safety guarding is opened; an emergency stop is activated; a person is detected within a defined area; and a software interface.

In a further embodiment of the linear motor conveyor, one or more of the physical safety zones is provided by safe torque-off (STO) functionality.

In a further embodiment of the linear motor conveyor, the STO functionality disables power to coil driving circuity.

In a further embodiment of the linear motor conveyor, the STO functionality shorts coils to decelerate shuttles.

In a further embodiment of the linear motor conveyor, at least two of plurality of virtual safety zones overlap with each other.

In accordance with the present disclosure, there is further provided a method for operating a linear motor conveyor system, the method comprising: defining a plurality of virtual safety zones each comprising at least a portion one or more physical safety zones, each physical safety zone comprising a subset of a plurality of coils of a linear motor of a track section of a plurality of track sections that are capable of independently de-energizing the subset of coils of the respective physical safety zone; receiving a halt signal associated with a virtual safety zone of the plurality of virtual safety zones; and disabling the one or more physical safety zones of the virtual safety zone associated with the received halt signal to stop motion of shuttles within the virtual safety zone and de-energize the subset of coils of the one or more physical safety zones of the virtual safety zone.

In a further embodiment of the method, the method further comprises: stopping shuttles travelling on the conveyor system from entering a disabled physical safety zone.

In a further embodiment of the method, the method further comprises: enabling the disabled virtual safety zone; recovering shuttles in the enabled virtual safety zone to recovery positions; and resuming normal operation of the enabled virtual safety zone.

In a further embodiment of the method, the method further comprises: controlling motion of shuttles in enabled virtual safety zones while one or more of the virtual safety zones are disabled.

In a further embodiment of the method, at least one of virtual safety zones comprises a synchronous virtual safety zone associated with a synchronous machine.

In a further embodiment of the method, the synchronous virtual safety zone comprises a synchronous portion of the track over shuttles move synchronously.

In a further embodiment of the method, shuttles in the synchronous portion of the synchronous virtual move synchronously relative to one or more of: other shuttles in the synchronous portion; and an external synchronization device.

In a further embodiment of the method, the synchronous virtual safety zone further comprises an asynchronous portion of the track over shuttles move asynchronously arranged on either end of the synchronous portion of the track.

In a further embodiment of the method, the halt signal is received when work is to be performed on equipment of a virtual safety zone.

In a further embodiment of the method, the halt signal is provided when one or more of: a safety guarding is opened; an emergency stop is activated; a person is detected within a defined area; and a software interface.

In a further embodiment of the method, at least two of plurality of virtual safety zones overlap with each other.

In accordance with the present disclosure, there is further provided a non-transitory computer-readable medium storing instructions, which when executed by a controller performs a method as described above.

Multiple safety zones in a conveyor system may be helpful during commissioning and integration as they can allow separate safety zones of the conveyor system to be worked on by individuals while other shuttles, and other equipment, are running on other sections of the conveyor system. Multiple safety zones may also be useful during normal operations to allow one section to be temporarily stopped while other sections continue to operate normally.

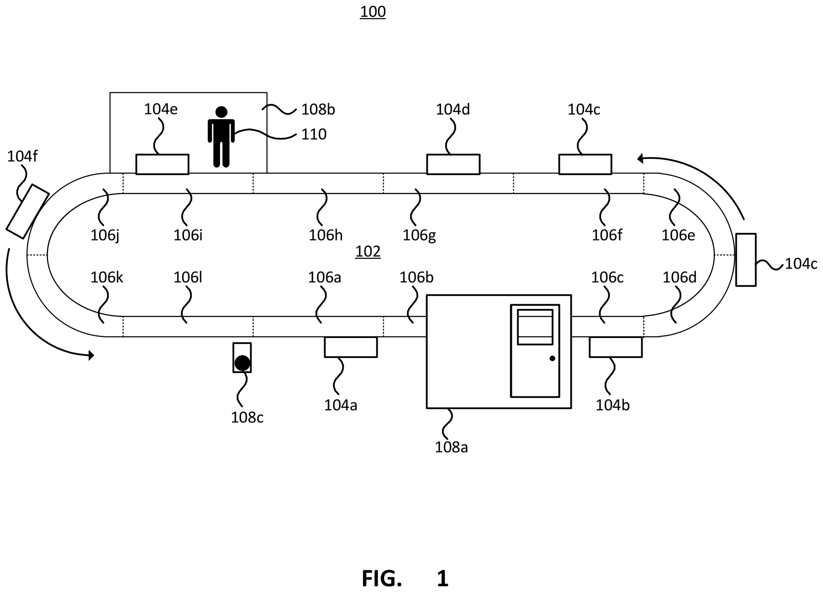

FIG. 1 depicts an illustrative linear motor conveyor system. The linear motor conveyor system 100 is depicted as a conveyor loop 102 on which a plurality of shuttles 104a..f (referred to collectively as shuttles 104) can move. The conveyor loop 102 is formed as a plurality of individual track sections 106a..106l (referred to collectively as track sections 106) that are joined together. Each of the track sections 106 include a plurality of electromagnetic coils (not shown in FIG. 1) that can be controllably energized in a manner that cause the shuttles 104 to move in a desired manner along the conveyor loop 102. It will be appreciated that although the conveyor is depicted as a simple loop, the linear motor conveyor can be provided in a wide range of configurations based on the particular application. Further, although the conveyor may generally be provided as closed loop in which shuttles circulate around the track, it is possible to have the conveyor arranged as an open-ended conveyor in which the shuttles move back and forth along the conveyor. Further, while the shuttles may circular around the loop generally in a clockwise, or anti-clockwise direction, the individual shuttles may over shorter sections move in opposite directions. Further, while the conveyor 102 is depicted in a horizontal orientation, it is possible for the conveyor to be arranged in a vertical or over-under orientation.

Regardless of the particular arrangement of the conveyor 102, there may be one or more areas along the track that may be protected by a virtual safety zone. FIG. 1 depicts various examples of scenarios where virtual safety zones may be used. A first example is depicted as guarding 108a that is provided around a section of the conveyor 102. The guarding 108a is depicted as an enclosed area with a door, although windows or other closeable openings could be provided. The guarding 108a can enclose the track section along with other tooling that may be operating at that point on the conveyor in order to ensure the safe operation of the process. This may include for example keeping individuals from physical contact with moving components, as well as providing other safety considerations such as providing a clean operating environment, containing process gases or off-gases that may occur as a result of the process etc. Regardless of the exact purpose of the guarding 108a, when the guarding is opened, the process is stopped and prevented from restarting or continuing until the guarding is closed.

A further example of a scenario in which virtual safety zones may be used is in a monitored safety area 108b in which presence of individuals 110, or potentially other objects such as vehicles etc. within the safety area is prohibited. The presence of a person or other prohibited object within the safety area can be detected by one or more sensors and used to stop the movement of any shuttles within, or into, the virtual safety area 108b until the person or object leave the safety area.

A further example of a scenario in which virtual safety zones may be used is depicted as an emergency stop button or switch 108c. Such emergency stop buttons may be used to quickly stop the conveyor in situations where an individual sees an unsafe or potentially unsafe condition in an area or track section of the conveyor. When the emergency stop button is activated, shuttles on the portion of the track covered by the virtual safety zone associated with the emergency stop button are stopped.

While various examples of scenarios are described above in which multiple virtual safety zones may be used, it will be apparent that they may be used in other scenarios not described. Further, since the virtual safety zones can be configured in software, it is possible to create temporary virtual safety zones. For example, while a virtual safety zone may not be required or desired on a particular section of the conveyor during normal operation, it may be desirable to protect the particular section by a virtual safety zone during installation, commissioning and integration.

Further, although not depicted in FIG. 1 it will be apparent that the conveyor system includes one or more control components for controlling operation of the conveyor system. The control may be distributed across one or more computers, controllers, microcontrollers, programmable logic controllers (PLCs), application specific integrated circuits (ASICs), field programmable gate arrays (FPGAs), etc.

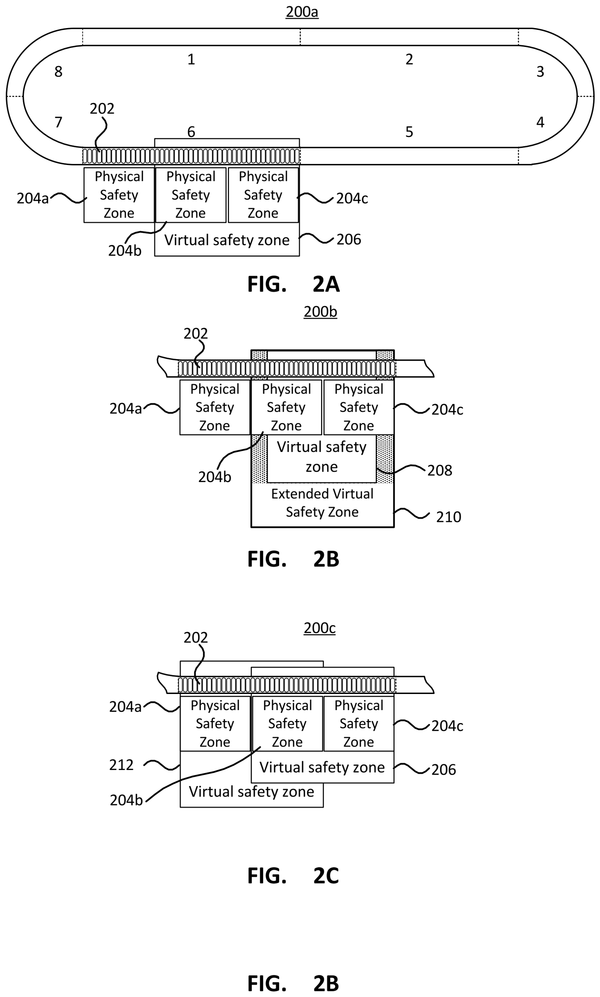

FIGs. 2A - 2C depicts details of a safety system of the linear motor conveyor system. A linear motor system 200a may be formed from a plurality of track sections, with 8 connected track sections depicted in FIG. 2A. Each track section provides a portion of the track along which shuttles (not shown in FIG. 2A) are controllably moved. Each track section includes a plurality of electromagnetic coils 202 (depicted only for track section 6). Power supplied to each individual coil is controlled in order to provide a force for moving the shuttles in a controlled manner. The number of coils 202 in each track section may vary based on various factors including the length of the track section, the required or desired positioning and movement characteristics along the track section, the shape of the track section, etc. As an example, the number of coils in a 1 meter long straight track section may be between 30 and 100.

Regardless of the number of coils in a particular track section, each track section includes at least one physical safety zone, with 3 physical safety zones 204a..204c shown in FIG. 2A. Each physical safety zone is a portion of the track that can be made safe for an individual to work on the track section. The physical safety zone may be provided with a safety stop that makes the track section safe for work in various ways, for example, each track section may have a switch, fuse or breaker that can be controlled in order to turn off power to the track section. Once all of the shuttles are stopped on the track section and the switch, fuse or breaker operated to turn off power, the linear motor of the track section is unable to move the shuttles. It is noted that without power to the linear motor, it may still be possible to manually move the shuttles as there is no active force provided by the linear motor to prevent the motion. Other braking mechanisms separate from the linear motor could be used to prevent such motion. However, generally the manual movement of shuttles by an individual is typically not a safety concern and may be desirable in certain situations such as during commissioning and integration.

While it is possible to provide a physical safety zone that covers an entire track section, it is possible to provide smaller physical safety zones. Each physical safety zone 204a, 204b, 204c has a safety stop that can be independently operated in order to place the track covered by the physical safety zone in a state that it is safe for an individual to work on it, or be in close proximity to it. The electronics in a track section, or controlling the track section, may include safe torque-off (STO) functionality that de-energizes the track section or portion of the track section. Such STO functionality may provide the safety stop of a physical safety zone.

Each physical safety zone may cover all of the coils in a track section, or may cover a contiguous subset of the coils in the track section. While it is possible for each individual coil to be covered by an individual physical safety zone, doing so would increase the complexity and cost of the electronics as it would require individual physical safety zones for each coil. Depending upon the application, the cost associated with increasing the number of physical safety zones along a track section may be beneficial; however a typical application may provide between 1 and 5 physical safety zones per track section.

Each of the physical safety zones 204a..204c comprise respective coils that can be de-energized in order to make the portion of track covered by the respective coils safe to work on since the shuttles cannot be moved by the linear motor. While the physical safety zones 204a..204c allow a section of track to be made safe to work on, it may be desirable to control larger sections of track together. One or more virtual safety zones 206 can be provided that can cover one or more physical safety zones and allow the physical safety zones to be operated together. As depicted in FIG. 2A, virtual safety zone 206 includes both physical safety zone 204b, and physical safety zone 204c. If a portion of the track covered by the virtual safety zone is disabled, for example because a guarding door on the track section is opened, all physical safety zones associated with the virtual safety zone will be disabled. Disabling a virtual safety zone causes the physical safety zones associated with the virtual safety zone to be disabled. Similarly, enabling a virtual safety zone enables the associated physical safety zones.

In FIG. 2A, the virtual safety zone 206 is aligned with the coverage of the physical safety zones 204b, 204c. That is virtual safety zone 206 covers all of physical safety zones 204b, 204c and no other safety zones. It is not necessary for a virtual safety zone to be aligned with the physical safety zones. As depicted in FIG. 2B, virtual safety zone 208 comprises a contiguous portion of coils in a portion of physical safety zone 204b and 204c. While the virtual safety zone does not need to be aligned with the physical safety zones, since the physical safety zones provide the lowest level of control, with regard to making a track section safe for working on, it may be desirable to have the virtual safety zone aligned with the physical safety zones. In such a case, an extended virtual safety zone 210 can be provided. The extended virtual safety zone extends each edge of a virtual safety zone to align with the edges of the physical safety zones. Extending the virtual safety zone may be done automatically when defining the virtual safety zone. That is, if a virtual safety zone is defined that covers only a portion of a physical safety zone, it can automatically be extended to cover the entire physical safety zone. Alternatively, the virtual safety zone can be extended dynamically. For example, if the virtual safety zone 208 is disabled, the virtual safety zone 208 can be automatically extended in order to cover the whole physical safety zones 204b, 204c.

FIGs. 2A, 2B depict individual virtual safety zones. Multiple virtual safety zones can be provided on a single conveyor system. Further, the virtual safety zones may overlap each other as depicted in FIG. 2C. As in FIG. 2A, Virtual safety zone 206 covers the coils controlled by the physical safety zones 204b, 204c. A second virtual safety zone 212 is depicted that covers the physical safety zone 204a as well as the physical safety zone 204b, which is also covered by virtual safety zone 206. While virtual safety zones that overlap will typically not fully overlap with each other, it is possible to provide two virtual safety zones that have cover the same physical safety zones.

FIGs. 2A - 2C depict virtual safety zones that cover only a portion of a track section. It will be appreciated that a single virtual safety zone may span multiple track sections. While the physical safety zones are provided at least in part by control hardware, the virtual safety zones can be defined within the controller and as such provide great flexibility in defining different safety zones. The virtual safety zones can be used to create temporary safety zones based on the current requirements. For example, during commissioning, it may be desirable to have different sized virtual safety zones at different stages. At an early stage it may be desirable to have the virtual safety zones relatively small so that each section can be worked on independently from each other. As commissioning continues smaller sections that were covered by respective virtual safety zones can be combined together in order to integrate the smaller sections together. In such a case the smaller virtual safety sections can be removed and replaced with a larger virtual safety section that allows the independent operation of the larger section.

The virtual safety zones allow portions of the conveyor system to be disabled and worked on, while other portions of the conveyor system, which may or may not be covered by other virtual safety zones continue to operate. Each individual virtual safety zone can be independently enabled and the operation of the track section associated with the virtual safety zone can be recovered to normal operation.

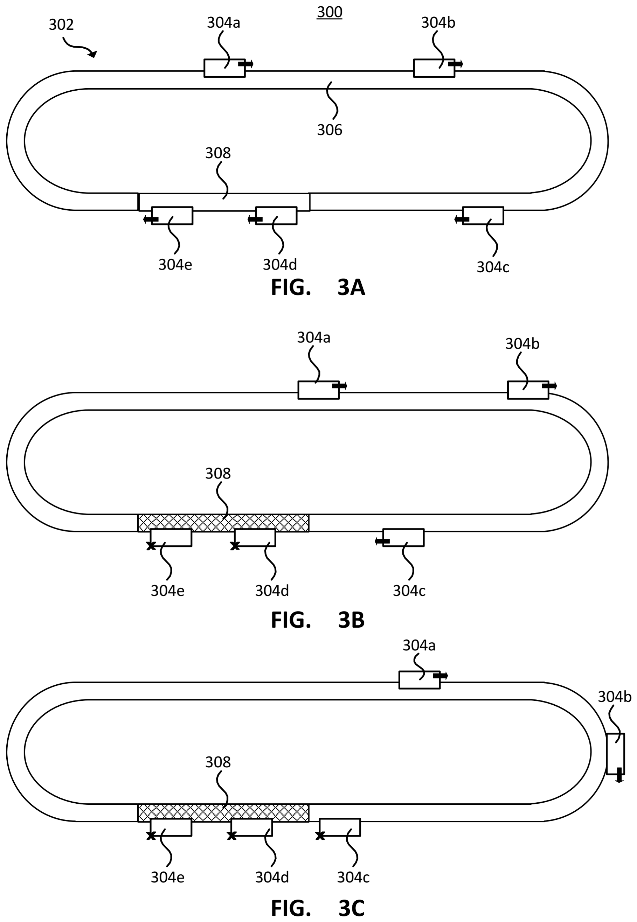

FIG. 3A - 3C depicts operation of a virtual safety zone of a linear motor conveyor system. The conveyor system 300 depicted in FIGs. 3A - 3C comprises a loop of track 302 with a plurality of shuttles 304a..304e (referred to collectively as shuttles 304) moving along the track. Although not depicted in FIGs. 3A - 3C, the conveyor system 300 would typically include one or more stations for performing some operation. The track 302 is depicted as having a single virtual safety zone 308 for clarity of the figure, however multiple virtual safety zones can be provided along the track.

As depicted in FIG. 3A all of the track is enabled and operating normally with shuttles 304 circulating around the track. It is noted that in FIG. 3A virtual safety zone 308 is enabled and shuttles 304d, 304e are moving along the track section normally. In FIG. 3B the virtual safety zone 308 is disabled. With the virtual safety zone 308 disabled, any shuttles moving along the associated track section, namely shuttled 304d, 304e, are stopped and the track section made safe to work on using the physical safety zones associated with the virtual safety zone 308. As depicted in FIG. 3B, although the virtual safety zone 308 is disabled, and so shuttles have stopped along that portion of the track, the remainder of the track is enabled and shuttles 304a..304c continue to move along the track.

As depicted in FIG. 3C, when shuttle 304c approaches the disabled virtual safety zone 308, the shuttle is prevented from moving into the virtual safety zone. The controller functionality of the conveyor system may automatically stop, in a safe manner, any shuttles that are approaching and about to enter a portion of the track that is disabled, regardless of whether the disabled track section is part of a virtual safety zone or not. Alternatively, the controller may monitor any disabled safety zones to identify any approaching shuttles and safely stop the shuttles before they enter the virtual safety zone. Similarly, the controller may monitor the shuttles to determine if any are approaching a disabled virtual safety zone and safely stop the shuttle before entering the virtual safety zone. Although not depicted in FIG. 3C, as other shuttles approach the virtual safety zone 308 they would also be stopped prior to hitting, or approaching within a set distance, any other shuttles that may be on the track, such as stopped shuttle 304c.

FIGs. 3A - 3C depict the disabling of virtual safety zones, which may the track sections associated with the virtual safety zone safe for an individual to work on the track section or be in close proximity to the track section for other purposes. Once the work is completed and an individual is no longer in proximity to the track section, the track section can return to normal operation.

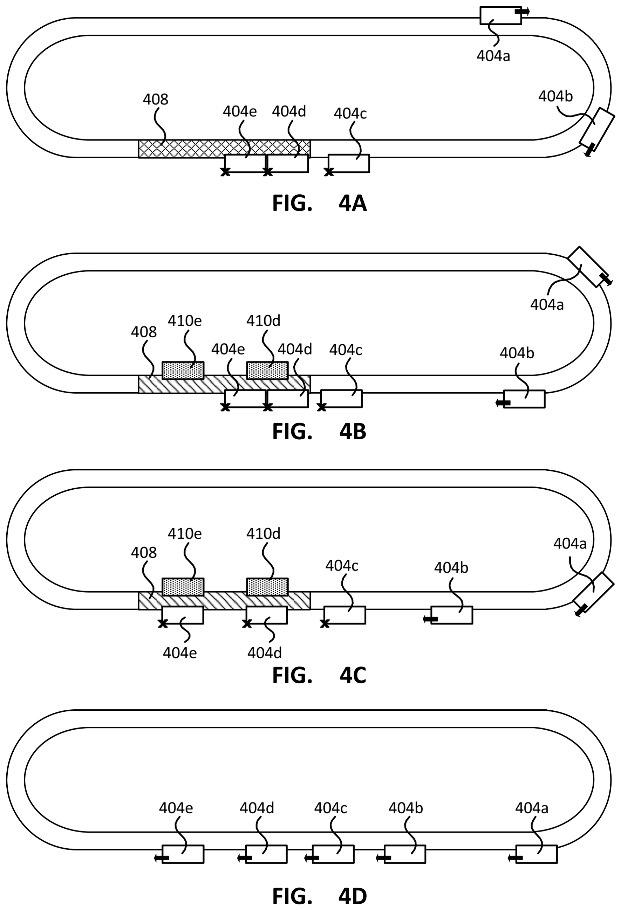

FIG. 4A - 4D depicts recovery of the virtual safety zone and the resumption of normal operation of the linear motor conveyor system. FIG. 4A depicts a similar track state as FIG. 3C with a disabled virtual safety zone 408 with two stopped shuttles 404d, 404e in the virtual safety zone. Shuttle 404c is stopped before the virtual safety zone on an enable track section. In FIG. 4A it is assumed that a worker has performed some work on the track section associated with virtual safety zone 408. Since the virtual safety zone has de-energized the coils of the track section using the physical safety zones, the shuttles are able to be manually moved, for example by the worker pushing the shuttles along the track. In FIG. 4A it is assumed that the worker has manually moved both shuttles 404d, 404e and has completed the work. Once the virtual safety zone is clear of workers, the virtual safety zone can be enabled.

FIG. 4B and 4C depict the virtual safety zone 408 being in an enabled state. While the track associated with the virtual safety zone 408 may be enabled, it may not be in a state in which normal operation can resume. For example, after manually moving the two shuttles 404d, 404e, the shuttles may be too close together for normal operation. Other reasons for being unable to resume normal operation are possible. Once enabled, the positions of the shuttles are recovered to safe positions before resuming normal operation. The recovery may first determine safe recovery positions, depicted as positions 410d, 410e, for all of the shuttles in the virtual safety zone as depicted in FIG. 4B. Various factors can be accounted for when determining the respective safe positions for each shuttle, including for example safe distances between shuttles. Further consideration may include whether or not a shuttle can be moved to the position, for example, shuttle 404d could not move to recovery position 410e, without moving the shuttle 404e out of the disabled zone 408. While it may be possible to move a shuttle out of a disabled zone during recovery, it may be desirable to recover all shuttles within a virtual safety zone to positions within the virtual safety zone if possible. Accordingly, in FIG. 4B it is assumed that shuttle 404e will move to recovery position 410e and shuttle 404d will move to recovery position 410d as depicted in FIG. 4C. When moving the shuttles to recovery positions, they may be moved at a reduced speed compared to the normal operating speed. As can be seen in FIGs. 4A - 4C the remaining track section remains enabled and other shuttles, such as shuttles 404a, 404b, continue to circulate along the enabled track sections. Although shuttle 404c is on a normally operating track section, it is not moving as the virtual track section 408 has not yet resumed normal operation.

As depicted in FIG. 4D, once all of the shuttles 404d, 404e in the virtual safety zone 408 have moved to their respective recovery locations 410d, 410e normal operation of the virtual safety zone can resume and all shuttles 404a..e can resume circulating along the entire track section, assuming no other track sections are disabled.

The above has described recovering a virtual safety zone and resuming normal operation of the entire track. It is possible to recover a single, or a plurality of contiguous, virtual safety zones and resuming operation on only the single or plurality of contiguous virtual safety zones, even if other portions of the track are disabled. Such operation allows different portions of a track to be stopped and worked on independently of each other, which may be particularly beneficial during the commissioning and integration of the conveyor system as well as during normal operation.

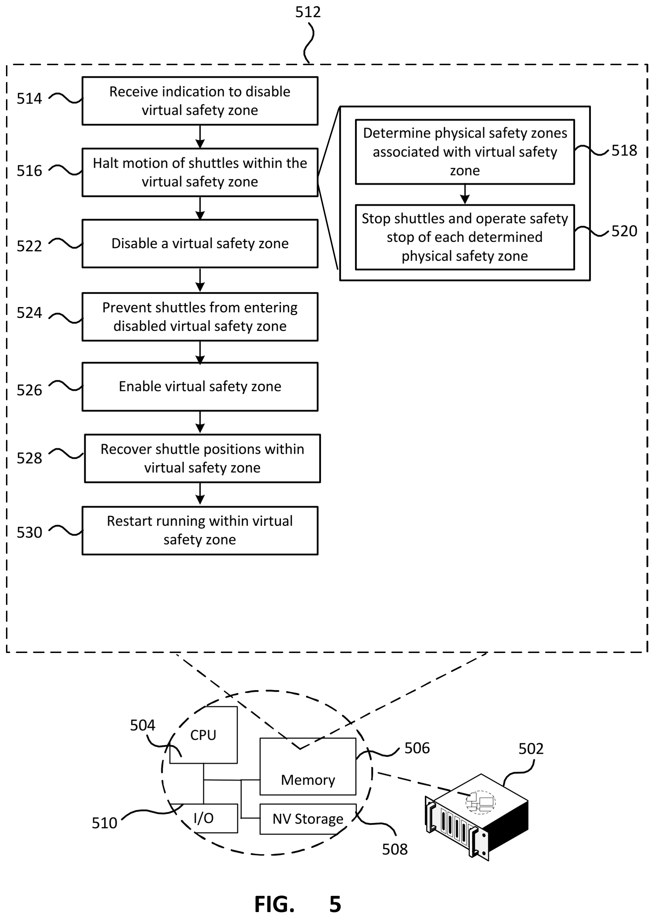

FIG. 5 depicts a controller for operating a virtual safety zone. The controller 502 is depicted as a single computer server. The controller 502 may contain one or more processors or microprocessors, such as a central processing unit (CPU) 504 that executes software stored in a non-transitory internal memory 506, preferably random access memory (RAM) and/or read only memory (ROM), and possibly additional nonvolatile memory 508. One or more input/output (I/O) interfaces 510 may be provided to interface the controller to other components of the conveyor system. It will be appreciated that the control of the conveyor system may be provided by one or more other devices such as controllers, microcontrollers, programmable logic controllers (PLCs), application specific integrated circuits (ASICs), field programmable gate arrays (FPGAs), etc. Further, while the of the conveyor system may be provided by a single device, it is possible for the control to be distributed across one or more devices.

The controller, whether provided as a single device or distributed across a plurality of devices, executes instructions stored in memory in order to provide functionality for controlling the operation of the conveyor system. The functionality may include functionality for operating one or more virtual safety zones 512.

The functionality for operating one or more virtual safety zones 512 is depicted in FIG. 5 as a set of method steps for clarity of the description; however, the same functionality may be implemented in other ways. In FIG. 5, it is assumed that at least one virtual safety zone is defined in the controller in a manner that associates at least a portion of at least one physical safety zone of the conveyor track with the virtual safety zone. Further, it is assumed that the virtual safety zone, and the rest of the track, is initially in a normal operating state. At some point, an indication to disable a virtual safety zone is received (514). The indication to disable a virtual safety zone may be provided in various ways including for example opening guarding protecting a section of track associated with the virtual safety zone, or possibly operating another sensor or interface component indicating a desire to disable the virtual safety zone. Once the indication to disable the virtual safety is received, the motion of any shuttles moving within the virtual safety zone are halted (516). Halting motion of the shuttles of a virtual safety zone may comprise determining the physical safety zones of the track that are associated with the virtual safety zone (518) and then stopping the shuttles on the track and operating the safety stop of each of the determined physical safety zones (520). Movement of the shuttles may first be stopped and then then the safety stop, which may be provided by for example respective STO functionality for the track section associated with the virtual safety zone, in order to prevent the linear motor from moving the shuttles. With the shuttles halted in the virtual safety zone, the virtual safety zone, and the associated physical safety zones, can be disabled (522). Any shuttles travelling towards the disabled virtual safety zone are prevented from entering the virtual safety zone (524). It is noted that the control of shuttles may prevent shuttles from entering or travelling over or through a disable portion of track. Alternatively, additional monitoring may be provided in order to detect any shuttles that may enter the disabled virtual safety zone and prevent the shuttle from doing so, which may comprise slowing and/or stopping movement of the shuttle on the track. Shuttles may be stopped on a portion of the track, whether inside the virtual safety zone, spanning a virtual safety zone such that the shuttle is partially inside the virtual safety zone and partially outside of it, or fully outside of the virtual safety zone. Other shuttles moving on a track are controlled in order to avoid colliding with other shuttles, and will be stopped, if necessary, in order to avoid colliding with any shuttles stopped on the track.

Once the virtual safety zone, and associated track section, is disabled, it may be considered as safe to work on and as such individuals may proceed to perform any work, maintenance, or other tasks, that may be required or desired. Once completed and workers are clear of the track, the virtual safety zone can be enabled (526). The virtual safety zone can be enabled for example by closing a guarding, exiting an area, etc. Once the virtual safety zone is enabled, the shuttle positions within the virtual safety zones are recovered (528). Recovering the shuttle positions may comprise, determining what shuttles are in the virtual safety zone, determining safe recovery positions for each of the shuttles and then moving each of the shuttles to the determined safe recovery position. Once the shuttles are moved to the recovery positions, normal running within the virtual safety zone can restart (530).

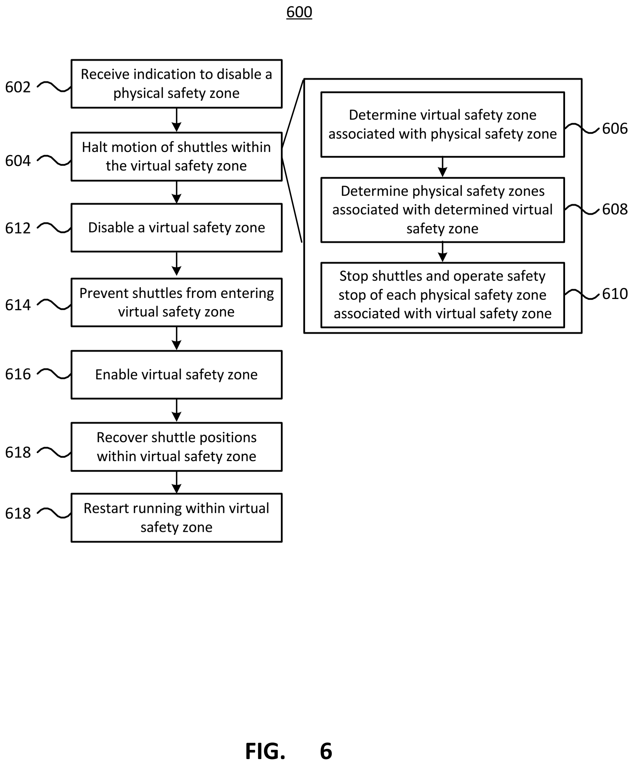

FIG. 6 depicts a further method of operating a virtual safety zone. The functionality of method 600 is similar to that described above with reference to FIG. 5; however, rather than received in indication to disable a virtual safety zone as described above, the method 600 receives an indication to disable a physical safety zone (602). It is assumed that the physical safety zone is associated with a virtual safety zone. Once the indication to disable the physical safety zone is received, shuttle motion within the virtual safety zone is halted (604). Halting the motion of the shuttles may comprise determining the virtual safety zone associated with the physical safety zone to be disabled (606). Any other physical safety zones associated with the virtual safety zone are determined (608). Any shuttles that are within the determined virtual safety zone are the stopped on the track and the safety stop of each of the physical safety zones associated with the virtual safety zone are operated in order to make the portion of the track covered by the virtual safety zone safe to work on or near the track.

The remainder of method 600 is substantially similar to that described above with reference to FIG. 5. With the shuttles halted in the virtual safety zone, the virtual safety zone, and the associated physical safety zones, can be disabled (612). Any shuttles travelling towards the disabled virtual safety zone are prevented from entering the virtual safety zone (614). With the track portion associated with the virtual safety zone disabled, the track may be worked on or near the track. Once completed and workers are clear of the track, the virtual safety zone can be enabled (616), for example by closing a guarding, exiting an area, etc. Once the virtual safety zone is enabled, the shuttle positions within the virtual safety zones are recovered (618) and normal running within the virtual safety zone restarted.

The above has described the use of virtual safety zones to provide multiple independent safety zones along a linear motor conveyor system. Linear motor conveyor systems may be asynchronous in which shuttles can move as required by the individual shuttle. Asynchronous control determines the motion for each shuttle individually and ensures the shuttle is not moved in a manner that contravenes one or more rules such as safe acceleration speeds, safe following distances, etc. While the motion of shuttles on a linear motor conveyor is inherently asynchronous, they can be operated in a synchronous mode in which motion of individual shuttles are synchronized. The motion of the shuttles can be synchronized to other shuttles and/or to other components. For example, a synchronous linear motor conveyor may synchronize motion of all shuttles to a master synchronization signal that is used to determine the position/movement of the shuttles. In synchronous conveyor systems, if one synchronous portion of the conveyor is stopped, the other synchronous portions are also stopped. As described further below, virtual safety zones can be used to provide multiple synchronous safety zones, which can enable different synchronous portions to run de-coupled.

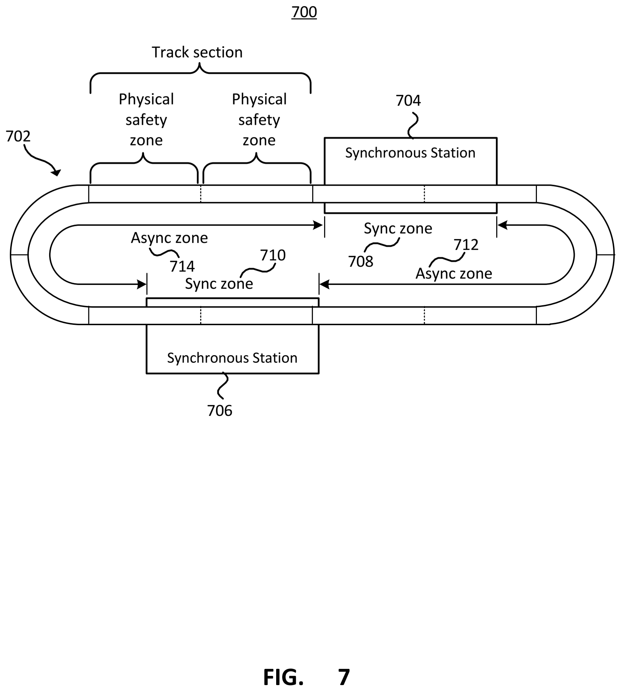

FIG. 7 depicts a linear motor conveyor system with multiple synchronous stations. The conveyor system 700 comprises a loop of linear motor conveyor track 702 over which shuttles (not shown) can be controlled, either in an asynchronous manner or a synchronous manner. The conveyor track is provided as a plurality of straight track sections and 90° curved sections. In FIG. 7 it is assumed that each straight track section is split into two physical safety zones, while each 90° curved section is assumed to have a single physical safety zone. A plurality of synchronous stations 704, 706 are arranged along the track 702. At each synchronous station, the movement of shuttles, along with the movement of other equipment of the synchronous station are synchronized, to at least one sync source. Each synchronous station may have its own master sync signal, or a single master sync signal can be provided for the entire conveyor system. Regardless of what shuttle movement is synchronized to, the shuttles move through the synchronous station in a synchronous manner. Accordingly, the conveyor track 702 can be arranged as a plurality of sync zones each connected by one or more async zones. When a shuttle moves over a sync zone, such as the sync zones 708, 710, it is controlled in a synchronous manner. When the shuttle moves over an async zone, such as the async zones 712, 714, it is controlled in an asynchronous manner. As a shuttle approaches a synchronous zone from an asynchronous zone it may be controlled in a manner to ensure it is entering the synchronous zone as required by the synchronization signal. As a simple example, if the synchronous zone requires a shuttle to enter every second, a shuttle travelling towards the synchronous zone can be sped up or slowed down in order to ensure that the shuttle reaches and enters the synchronous zone at the appropriate time, velocity and acceleration. The actual synchronization characteristics can be more complex in reality.

As depicted in FIG. 7, the conveyor system 700 comprises a pair of synchronous stations 704, 706 that are connected by asynchronous track sections. The asynchronous sections connecting two synchronous stations can allow the synchronous stations to operate independent of each other. With the synchronous stations able to operate independently from each other, each can be associated with respective virtual safety zones which can independently disable/enable operation of the synchronous stations without requiring the other synchronous station to be disabled or enabled. It is noted that while two synchronous stations are depicted in FIG. 7, a conveyor system can have a plurality of synchronous stations. Further, FIG. 7 depicts only synchronous stations, it is possible to include asynchronous stations on the conveyor system.

While it is possible to provide virtual safety zones surrounding a sync zone of the conveyor track, providing smooth and safe operation between a disabled sync zone and an enabled async zone can be challenging. For example, when restarting normal operation of the sync zone, depending upon the location of shuttles, it may not be possible to recover the sync zone without moving shuttles into the operating async zones. Other considerations can make it difficult to disable synchronous zones immediately adjacent to enabled asynchronous zones. As described further below, in a similar manner of extending the virtual safety zones described above, the synchronous zone can be extended to provide a synchronous safety zone which includes asynchronous zones on each end of the sync zone.

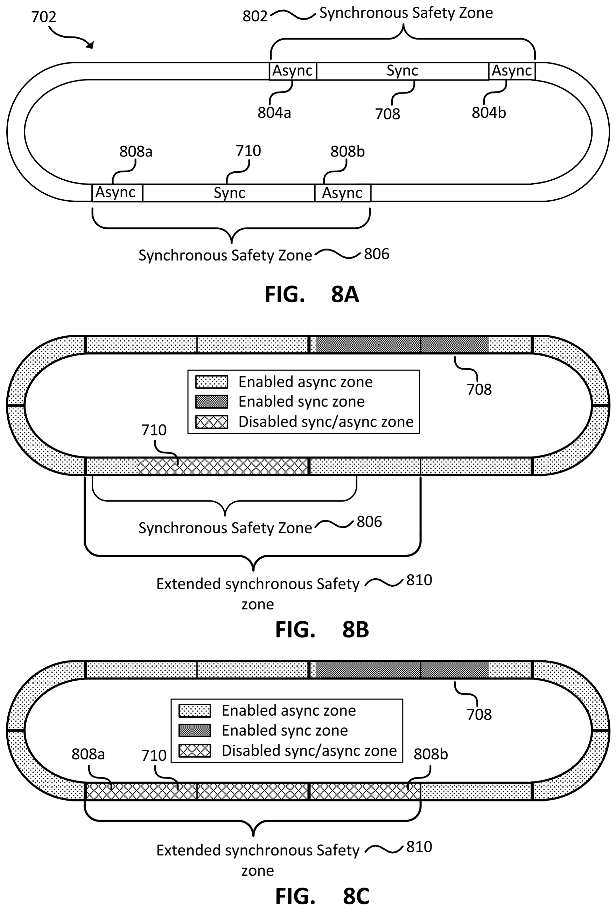

FIG. 8A depicts a linear motor conveyor system with multiple synchronous safety zones. The conveyor track 702 descried above with reference to FIG. 7 is depicted. The track includes sync zones 708, 710 each associated with the respective synchronous stations (not shown in FIG. 8). In order to provide multiple synchronous safety zones, each sync zone is extended to a respective synchronous safety zone 802, 806. As depicted, each synchronous safety zone comprises the sync zone with respective async zones on each end. For example synchronous safety zone 802 includes the sync zone 708, a first async zone 804a, and a second async zone 804b. Simliarly, the synchronous safety zone 806 comprises the sync zone 710, a first async zone 808a, and a second async zone 808b. Although not explicitly shown in FIG. 8A it is noted that the two synchronous safety zones 802, 802 are joined by async zones of the conveyor track. It is possible to operate each synchronous safety zone as a virtual safety zone, which allows the synchronous safety zones to be disabled/enabled independently without impacting operation of the rest of the track, besides possibly requiring shuttles to stop before entering a disabled synchronous safety zone.

FIG. 8B depicts an extended synchronous safety zone. The conveyor track depicted in FIG. 8B is the same as that depicted in FIG. 8A, however, the different sync and async zones along the track are depicted as being either enabled or disabled. As depicted, the sync zone 708 is depicted as being enabled and the sync zone 710 is depicted as being disabled. All of the async zones, including the async zones of the synchronous safety zones 802, 806, enabled. FIG.8B additionally depicts the individual track sections. It is assumed similar to above that each straight track section comprises two physical safety zones while each curved section includes a single physical safety zone.

As depicted in FIG. 8B, the synchronous safety zone 806, which includes a portion of the async zone on either side of the sync zone 710 does not align with the boundaries of the physical safety zones. It is possible to extend the synchronous safety zone in order to align with the boundaries of the physical safety zone. As depicted by the extended synchronous safety zone 810, each async zone on either side of the sync zone of the synchronous safety zone can be extended in order to align with the boundaries of the physical safety zones.

When the sync zone 710 of a synchronous safety zone 806 is disabled, the sync zone 710 as well as the async zones 808a, 808b of the synchronous safety zone 806, or similarly an extended synchronous zone 810, are also disabled as depicted in FIG. 8C. Disabling the synchronous safety zone, or the extended synchronous safety zone is similar to disabling the virtual safety zone or the extended virtual safety zone as described above and causes any shuttles travelling on the synchronous safety zone or the extended synchronous safety zone to be stopped and the associated physical safety zones operated in order to make the synchronous safety zone or the extended synchronous safety zone safe to work on or near the track.

With multiple safety zones, whether synchronous or not, each individual safety zone can be recovered independently as if it were its own straight track conveyor. When restarting or resuming normal operation of an entire track, or multiple sections with multiple separate safety zones, it may be first necessary to break up the track based on which portions are enabled or not, and then recover and restart each section. A recovery process for the track state shown in FIG. 8C is described further below.

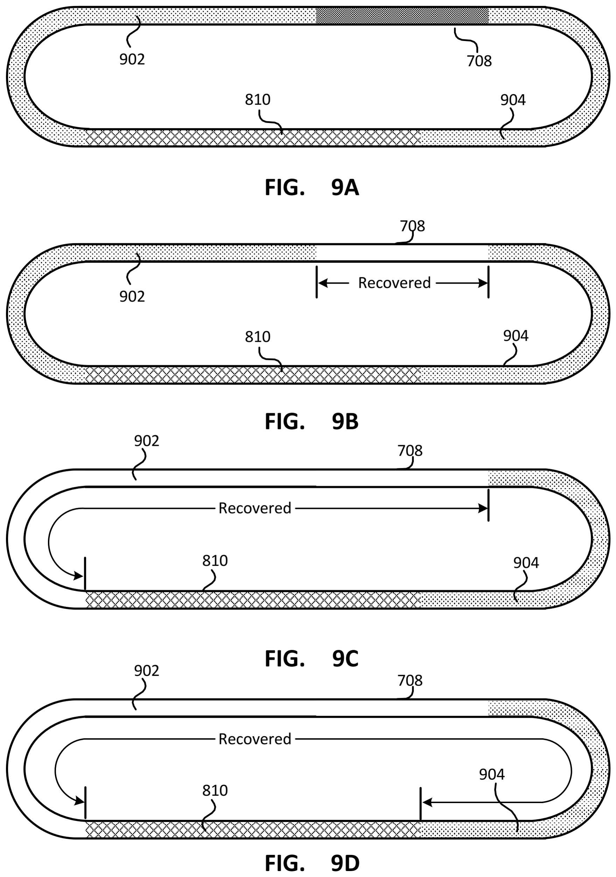

FIGs. 9A - 9D depicts a recovery process with multiple synchronous safety zones. It is assumed that the entire track was disabled, or is performing a globally recovery with some portions of the track enabled as some disabled. FIG. 9A depicts an initial track state when the recovery process for the entire conveyor track. As depicted one sync zone is enabled 708, one sync zone and associated async zones of a synchronous safety zone is disabled 810. The remaining async zones 902, 904 are enabled between the enabled sync zone 708 and the disabled extended synchronous safety zone 810.

The recovery process begins with first recovering the enabled sync zone 708 which is depicted in FIG. 9B. Recovering the sync zone comprises determining what shuttles are in the sync zone, determining safe recovery positions within the sync zone that the shuttles can be recovered to and moving the shuttles to the determined safe recovery positions. If all of the shuttles in the sync zone do not have corresponding safe recovery positions in the sync zone, the shuttles can be moved out of the sync zone into one of the adjoining enabled async zones 902, 904. The safe recovery positions within a sync zone may account for a sync signal associated with the sync zone. Once the sync zone is recovered one of the adjacent async zones is recovered as depicted in FIG. 9C with async zone 902 being recovered. The other async zone 904 is recovered as depicted in FIG. 9D and then since all the shuttles in the enabled zones have been recovered to the determined safe positions, normal operation of the enabled track sections can resume. The process for recovering an async track section is similar to that for the sync zones, however synchronization does not need to be considered. The safe recovery position is typically any position along the track in the async zone that does not contravene rules such as proximity to other shuttles. Although normal operation has resumed on the enabled portion of the conveyor, namely, sections 708, 902, 904 the extend synchronous safety zone 810 remains disabled and as such shuttles will not be able to move over this track section and work may be performed on the track or near the track.

Although the conveyor system includes multiple synchronous portions, which would typically be disabled together, extending each sync zone with async zones on either side allow the combined async-sync-async section to be independently disabled/enabled. Disabling synchronous portions of the conveyor independent of other sections can improve the commissioning and integration process by allowing different sections of the track to be worked on simultaneously, without having to coordinate the starting and stopping of the different track sections. Similarly, the ability to independently stop sections of track, even if it includes a synchronous section, after the conveyor is fully commissioned and operational can improve the operation since only a portion of the conveyor needs to be stopped if a synchronous portion is stopped. The synchronous safety zones may combine adjacent sync zones together into a larger synchronous safety zone. Additionally or alternatively, a single large sync zone may be split into a plurality of synchronous safety zones, which may be used to disable only a portion of a sync zone.

In FIGs. 9A - 9D the sync zones and async zones have already been adjusted for recovery based on the extended synchronous safety zones. The recovery process may begin with first identifying the enabled sync zones and async zones. The enabled async zones may include async zones that are associated with a sync zone in an extended synchronous safety zone. The extended synchronous safety zone may not be applied when the sync zone is disabled and as such the async zones on either side of a disabled sync zone may not be disabled. In such a case, the enabled async zones may be adjusted based on the synchronous safety zone or the extended synchronous safety zone.

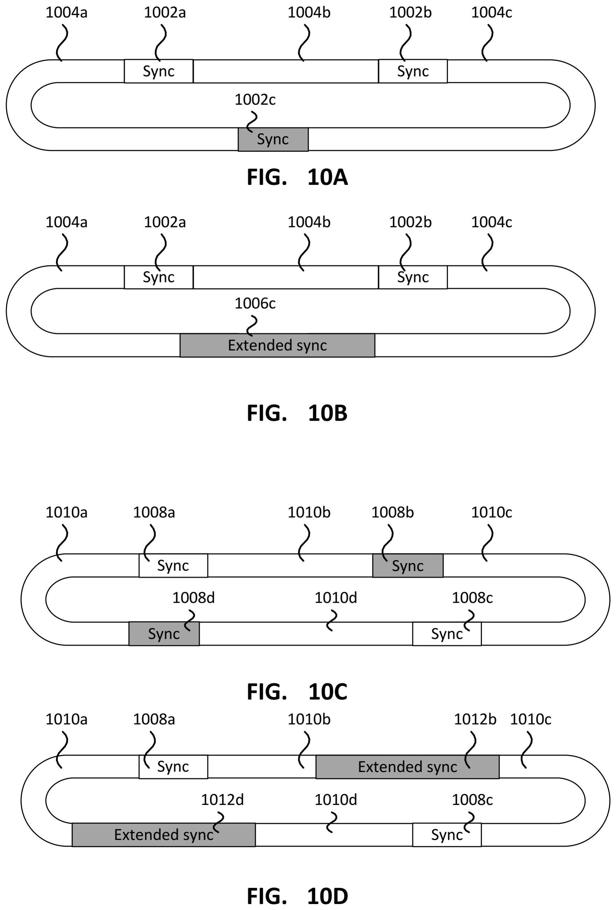

FIGs 10A, 10B depicts a portion of a recovery process for 3 synchronous safety zones. Each of the synchronous safety zones is associated with a respective sync zone, 1002a..1002c. As depicted in FIG. 10A, sync zones 1002a and 1002b are enabled while sync zone 1002c is disabled. The recovery process may identify contiguous sections of async and sync zones. In FIG. 10A, this comprises the async zone 1004a, sync zone 1002a, async zone 1004b, sync zone 1002b and async zone 1004c. In order to recover the track with a disabled sync zone, the enabled async zones are adjusted based on the extended sync zone associated with the sync zone. That is, the async zones on either side of the sync zone in the extended sync zone 1006c are removed from the enabled async zones 1004a, 1004c. Once the async zones are adjusted, the recovery process can begin. The recovery process may proceed with first recovering one sync zone, followed by the async zones attached to the sync zone, followed by the next sync zone, etc. In FIG. 10B this would proceed with, for example, recovering sync zone 1002a, than async zone 1004a, and async zone 1004b. The next sync zone 1002b could be recovered next. Recovering the sync zone 1002b may require moving one or more shuttles into the async zone 1004b, which may require re-recovering the async zone 1004b. If however, no shuttles were moved into the async zone 1004b, recovery can finish with recovering the async zone 1004c. Once all enabled zones are recovered, the enabled zones can be restarted.

FIGs 10C, 10D depicts a portion of a recovery process for multiple synchronous safety zones. In FIGs. 10C, 10D there are 4 sync zones with two enabled and two disabled. The recovery process is similar to that described above. However, the disabled sync zones cause there two be two separated track portions that need to be individually recovered.

As depicted in FIG. 10C, two sync zones are enabled, namely sync zones 1008a, 1008c, while two sync zones are disabled, namely sync zones 1008b, 1008d. Similar to above, although each sync zone is associated with respective synchronous safety zones that extend the sync zone with async zones on either side, the async zones are not initially disabled as depicted in FIG. 10C. The sync zones 1008a..1008d are joined by async zones 1010a..d which are each enabled.

When the recovery process starts, the enabled and disabled sync zones are identified and contiguous sections of enabled async and sync zones determined. As depicted in FIG. 10C, there are two contiguous recovery sections of enabled async and sync zones that are separated by the disabled sync zones. In particular, there is a first section comprising async zone 1010a, sync zone 1008a and async zone 1010b. The second section comprises async zone 1010c, sync zone 1008c and async zone 1010d. The recovery process begins with adjusting the async zones of each of the recovery sections. Since each section is separated, it is possible to process each section independently and possibly in parallel. Each of the async zones are adjusted according to the synchronous safety zone associated with each disabled sync zone. As depicted in FIG. 10D, the asynchronous zone 1010a is adjusted base on the synchronous safety zone 1012d, the asynchronous zone 1010b is adjusted base on the synchronous safety zone 1012b, the asynchronous zone 1010c is adjusted base on the synchronous safety zone 1012b, and the asynchronous zone 1010d is adjusted base on the synchronous safety zone 1012d. Once track is split into recovery sections based on the disabled sync zones, and asynchronous sync zones of the recovery sections adjusted based on the synchronous sync zones, or extended synchronous sync zones the recovery process for each recovery section can be performed.

As described above, if the async zones of a synchronous safety zone is not disabled with the associated sync zone, it can be subsequently disabled while adjusting the async zones to be recovered.

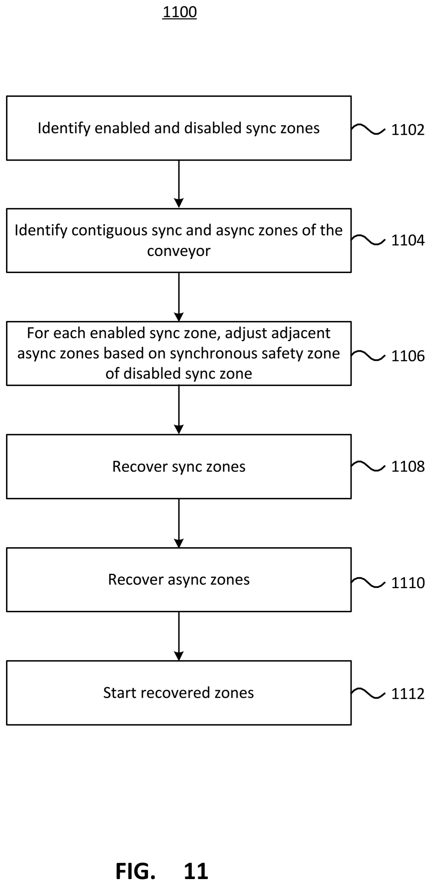

FIG. 11 depicts a global recovery process for recovering a conveyor system with multiple synchronous safety zones. The method 1100 may be used to recover multiple track sections with one or more disabled sync zones. The method begins with identifying the enabled and disabled sync zones (1102). Although described as identifying both the enabled and disabled zones, it is possible to only identify only the disabled sync zones, or the enabled sync zones, with the other zones not identified assumed to be enabled, or disabled. Although described as only identifying the enabled sync zones, it is possible to also identify enabled/disabled async zones. Once the disabled/enabled sync zones are identified, contiguous sections of enabled sync and async zones of the conveyor are identified (1104). Each contiguous section of enabled sync and async zones provide sections that can be independently recovered. Assuming that the conveyor is configured as a closed loop and there is at least one disabled section, the resulting recovery sections can be recovered as if they were individual straight track sections. For each of enabled sync zones, or each of the recovery sections if it includes a plurality of sync zones, the adjacent async zones are adjusted based on the synchronous safety zone of the abutting disabled sync zone (1106). Once the recovery sections are adjusted, each recovery section can be recovered by recovering the shuttles to safe recovery positions in the sync zones (1108), followed by the async zones (1110). Once all of the shuttles have been recovered in all of the enabled sections, the recovered zones can be restarted (1112).

The above has described recovering the shuttles in the sync zones prior to the async zones. It is noted that this is done as the recovery positions in the sync zones may be more restrictive than in the async zones and as such are performed first; however, other orders or recovering the sync and async zones are possible.

It will be appreciated by one of ordinary skill in the art that the system and components shown in FIGs. 1 - 11 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope of the current disclosure.
Examples of the present disclosure are set out in the following numbered clauses:
1. A linear motor conveyor system comprising:
   plurality of track sections each comprising a plurality of coils of a linear motor, the plurality of track sections arranged to provide a conveyor path along which a plurality of shuttles move;
   a plurality of physical safety zones each comprising a subset of coils of the linear motor and capable of independently de-energizing the subset of coils of the respective physical safety zone; and
   a controller configured to:
      define a plurality of virtual safety zones each comprising at least a portion one or more physical safety zones;
      receive a halt signal associated with a virtual safety zone of the plurality of virtual safety zones; and
      disabling the one or more physical safety zones of the virtual safety zone associated with the received halt signal to stop motion of shuttles within the virtual safety zone and de-energize the subset of coils of the one or more physical safety zones of the virtual safety zone.
2. The linear motor conveyor of clause 1, wherein one or more of:
   at least one of the physical safety zones comprises all of the coils of one of the track sections;
   at least one of the physical safety zones comprises a subset of the coils of one of the track sections;
   at least one of the physical safety zones comprises between 1 and 50 coils of one of the track sections; and
   at least one of the physical safety zones comprises between 10 and 30 coils of one of the track sections.
3. The linear motor conveyor of clause 2, wherein the controller is further configured to stop shuttles from entering a disabled physical safety zone.
4. The linear motor conveyor of any one of clauses 1 to 3, wherein the controller is further configured to:
   enable the disabled virtual safety zone;
   recover shuttles in the enabled virtual safety zone to recovery positions; and
   resume normal operation of the enabled virtual safety zone.
5. The linear motor conveyor of any one of clauses 1 to 4, wherein the controller is further configured to:
   control motion of shuttles in enabled virtual safety zones while one or more of the virtual safety zones are disabled.
6. The linear motor conveyor of clause 5, wherein at least one of virtual safety zones comprises a synchronous virtual safety zone associated with a synchronous machine.
7. The linear motor conveyor of clause 6, wherein the synchronous virtual safety zone comprises a synchronous portion of the track over shuttles move synchronously.
8. The linear motor conveyor of clause 7, wherein shuttles in the synchronous portion of the synchronous virtual move synchronously relative to one or more of:
   other shuttles in the synchronous portion; and
   an external synchronization device.
9. The linear motor conveyor of clause 8, wherein the synchronous virtual safety zone further comprises an asynchronous portion of the track over shuttles move asynchronously arranged on either end of the synchronous portion of the track.
10. The linear motor conveyor of any one of clauses 1 to 9, wherein the halt signal is received when work is to be performed on equipment of a virtual safety zone.
11. The linear motor conveyor any one of clauses 1 to 10, wherein the halt signal is provided when one or more of:
   a safety guarding is opened;
   an emergency stop is activated;
   a person is detected within a defined area; and
   a software interface.
12. The linear motor conveyor of any one of clauses 1 to 11, wherein one or more of the physical safety zones is provided by safe torque-off (STO) functionality.
13. The linear motor conveyor of clause 12, wherein the STO functionality disables power to coil driving circuity.
14. The linear motor conveyor of clause 12 or 13, wherein the STO functionality shorts coils to decelerate shuttles.
15. The linear motor conveyor of any one of clauses 1 to 14, wherein at least two of plurality of virtual safety zones overlap with each other.
16.A method for operating a linear motor conveyor system, the method comprising:
   defining a plurality of virtual safety zones each comprising at least a portion one or more physical safety zones, each physical safety zone comprising a subset of a plurality of coils of a linear motor of a track section of a plurality of track sections that are capable of independently de-energizing the subset of coils of the respective physical safety zone;
   receiving a halt signal associated with a virtual safety zone of the plurality of virtual safety zones; and
   disabling the one or more physical safety zones of the virtual safety zone associated with the received halt signal to stop motion of shuttles within the virtual safety zone and de-energize the subset of coils of the one or more physical safety zones of the virtual safety zone.
17. The method of clause 16, further comprising:
   stopping shuttles travelling on the conveyor system from entering a disabled physical safety zone.
18. The method of clause 16 or 17, further comprising:
   enabling the disabled virtual safety zone;
   recovering shuttles in the enabled virtual safety zone to recovery positions; and
   resuming normal operation of the enabled virtual safety zone.
19. The method of any one of clauses 16 to 18, further comprising:
   controlling motion of shuttles in enabled virtual safety zones while one or more of the virtual safety zones are disabled.
20. The method of clause 19, wherein at least one of virtual safety zones comprises a synchronous virtual safety zone associated with a synchronous machine.
21. The method of clause 20, wherein the synchronous virtual safety zone comprises a synchronous portion of the track over shuttles move synchronously.
22. The method of clause 21, wherein shuttles in the synchronous portion of the synchronous virtual move synchronously relative to one or more of:
   other shuttles in the synchronous portion; and
   an external synchronization device.
23. The method of clause 22, wherein the synchronous virtual safety zone further comprises an asynchronous portion of the track over shuttles move asynchronously arranged on either end of the synchronous portion of the track.
24. The method of any one of clauses 16 to 23, wherein the halt signal is received when work is to be performed on equipment of a virtual safety zone.
25. The method any one of clauses 16 to 24, wherein the halt signal is provided when one or more of:
   a safety guarding is opened;
   an emergency stop is activated;
   a person is detected within a defined area; and
   a software interface.
26. The method any one of clauses 16 to 25, wherein at least two of plurality of virtual safety zones overlap with each other.
27.A non-transitory computer-readable medium storing instructions, which when executed by a controller performs a method according to any one of clauses 16 to 26.

## Claims

1. A method for operating a linear motor conveyor system comprising a plurality of track sections and a plurality of physical safety zones, the method comprising:
defining a plurality of virtual safety zones each comprising at least one physical safety zone of a plurality of physical safety zones each comprising a subset of a plurality of coils of a linear motor of a track section of a plurality of track sections that are capable of independently de-energizing the subset of coils of the respective physical safety zone;
receiving a halt signal associated with a virtual safety zone of the plurality of virtual safety zones; and
disabling the one or more physical safety zones of the virtual safety zone associated with the received halt signal to stop motion of shuttles within the virtual safety zone and de-energize the subset of coils of the one or more physical safety zones of the virtual safety zone.

2. The method of claim 1, further comprising:
stopping shuttles travelling on the conveyor system from entering a disabled physical safety zone.

3. The method of claim 1 or 2, further comprising:
enabling the disabled virtual safety zone;
recovering shuttles in the enabled virtual safety zone to recovery positions; and
resuming normal operation of the enabled virtual safety zone.

4. The method of any one of claims 1 to 3, further comprising:
controlling motion of shuttles in enabled virtual safety zones while one or more of the virtual safety zones are disabled.

5. The method of claim 4, wherein at least one of virtual safety zones comprises a synchronous virtual safety zone associated with a synchronous machine.

6. The method of claim 5, wherein the synchronous virtual safety zone comprises a synchronous portion of the track over shuttles move synchronously.

7. The method of claim 6, wherein shuttles in the synchronous portion of the synchronous virtual move synchronously relative to one or more of:
other shuttles in the synchronous portion; and
an external synchronization device.

8. The method of claim 7, wherein the synchronous virtual safety zone further comprises an asynchronous portion of the track over shuttles move asynchronously arranged on either end of the synchronous portion of the track.

9. The method of any one of claims 1 to 8, wherein the halt signal is received when work is to be performed on equipment of a virtual safety zone.

10. The method any one of claims 1 to 9, wherein the halt signal is provided when one or more of:
a safety guarding is opened;
an emergency stop is activated;
a person is detected within a defined area; and
a software interface.

11. The method any one of claims 1 to 10, wherein at least two of plurality of virtual safety zones overlap with each other.

12. A linear motor conveyor system comprising:
plurality of track sections each comprising a plurality of coils of a linear motor, the plurality of track sections arranged to provide a conveyor path along which a plurality of shuttles move;
a plurality of physical safety zones each comprising a subset of coils of the linear motor and capable of independently de-energizing the subset of coils of the respective physical safety zone; and
a controller configured to perform a method according to any one of claims 1 to 11.

13. The linear motor conveyor of claim 12, wherein one or more of:
at least one of the physical safety zones comprises all of the coils of one of the track sections;
at least one of the physical safety zones comprises a subset of the coils of one of the track sections;
at least one of the physical safety zones comprises between 1 and 50 coils of one of the track sections; and
at least one of the physical safety zones comprises between 10 and 30 coils of one of the track sections.

14. The linear motor conveyor of any one of claims 12 or 13, wherein one or more of the physical safety zones is provided by safe torque-off (STO) functionality and wherein optionally the STO functionality disables power to coil driving circuity or shorts coils to decelerate shuttles.

15. A non-transitory computer-readable medium storing instructions, which when executed by a controller performs a method according to any one of claims 1 to 11.
